# EUROPÄISCHE PATENTANMELDUNG

(11) **EP 0 722 131 A2**
(43) Veröffentlichungstag der Anmeldung: **17.07.1996**
(21) Anmeldenummer: 95118626.1
(22) Anmeldetag: 27.11.1995
(51) Int. Cl.: G05B 19/409

(54) **Steuerpult für eine programmgesteuerte Werkzeugmaschine**

(30) Priorität: 11.01.1995 DE 29500386 U
(71) Anmelder: DECKEL MAHO GmbH, D-87459 Pfronten (DE)
(72) Erfinder: Friedrich, Wilfried, D-87537 Seeg (DE); Kuisel, Manfred, D-87491 Jungholz (DE)
(74) Vertreter: Patentanwälte Beetz - Timpe - Siegfried Schmitt-Fumian - Mayr

(57) **Zusammenfassung**

Gegenstand der Erfindung ist ein Steuerpult für eine programmgesteuerte Werkzeugmaschine, bestehend aus einem Ständer (2), einem ergonomisch angeordneten Bedienfeld (3) mit einer Vielzahl von Funktionstasten und aus einem Bildschirm (4), wobei das Bedienfeld und der Bildschirm in einem gemeinsamen Pultgehäuse (1) angeordnet sind. In einer Gehäuseausnehmung (6) sind mehrere gesonderte Bedienfelder (8, 9) vorgesehen, die wechselweise in der Bedienerfläche des Pultgehäuses (1) positionierbar sind. Die Funktionselemente dieser Bedienfelder sind über elektrische Anschlußverbinder mit den zugehörigen Bauteilen im Steuerpult verbindbar.

## Beschreibung

Die Erfindung betrifft ein Steuerpult für eine programmgesteuerte Werkzeugmaschine, bestehend aus einem Ständer, einem ergonomisch angeordneten Bedienfeld mit einer Vielzahl von Funktionstasten und aus einem Bildschirm, wobei das Bedienfeld und der Bildschirm in einem gemeinsamen Gehäuse angeordnet sind.

Moderne programmgesteuerte Werkzeugmaschinen, insbesondere Fräs- und Bohrmaschinen, sind in der Regel mit einem Steuerpult ausgerüstet, das seitlich neben der Maschine angeordnet ist und aus einem meist am Maschinengehäuse bewegbar angelenkten Ständer, einem oder auch mehreren Bedienfeldern mit einer Vielzahl von Funktionstasten und einem annähernd aufrechtstehenden Bildschirm besteht. Aus optischen und auch aus Platzgründen sind die Bedienfelder und auch der Bildschirm zusammen mit ihren elektronischen Bauelementen meistens in einem gemeinsamen Gehäuse untergebracht. Die große Anzahl an verschiedenen mehrachsigen Bearbeitungsmöglichkeiten hat insbesondere bei frei programmierbaren Werkzeugmaschinen und Bearbeitungszentren eine vergrößerte Anzahl an Funktionstasten auf dem Bedienfeld erfordert, das dementsprechend großflächiger ausgelegt werden mußte. Die Vielzahl von Funktionstasten, Anzeigen usw. in Verbindung mit den relativ großen Abmessungen des Bedienfeldes komplizierte jedoch die Bedienung und beeinträchtigte die Übersichtlichkeit des Bedienfeldes.

Aus der US-A-4 316 082 ist eine Computer-Konsole bekannt, bei der im hinteren Teil einer Arbeitstischplatte ein Bildschirm und in deren vorderem Teil ein fest installiertes Benutzer-Keyboard angeordnet sind. Unter der Tischplatte befindet sich in einer Abstellposition ein weiteres Keyboard, das bei Bedarf vor der Vorderkante der Tischplatte positioniert werden kann. Ein ähnlich ausgebildetes Steuerpult für Bearbeitungs- und Meßmaschinen ist aus der DE-A-41 25 137 bekannt.

In der DE-A-38 38 401 ist ein Datenverarbeitungsgerät mit einem als gesondertes Bedienungsmodul ausgebildeten Bedienfeld beschrieben, das in eine vertikale Frontkammer des Datenverarbeitungsgeräts eingesetzt wird. Zur Bedienung kann das Modul in einer schrägen Bedienstellung sowie in einer vertikalen Lage positioniert werden.

Aufgabe der Erfindung ist es, ein Steuerpult für Werkzeugmaschinen zu schaffen, das bei relativ geringen Abmessungen und ergonomischer Bedienbarkeit die Anordnung einer vergrößerten Anzahl von Funktionstasten auf dem Bedienfeld ermöglicht.

Diese Aufgabe wird erfindungsgemäß gelöst durch mehrere gesonderte Bedienfelder, die wechselweise in einer in der Bedienerfläche des Pultgehäuses vorgesehenen Ausnehmung positionierbar sind und deren Funktionselemente über elektrische Anschlußverbinder mit den zugehörigen Bauteilen im Steuerpult verbindbar sind.

Eine hinsichtlich Handhabung und Abmessungen besonders zweckmäßige Ausgestaltung der Erfindung zeichnet sich dadurch aus, daß zwei Bedienfelder in einem vorzugsweise flachen rechteckigen Kasten an seiner Ober- und Unterseite vorgesehen sind, der in der Gehäuse-Ausnehmung zwischen zwei Endstellungen verdrehbar gelagert ist. Diese Ausbildung des Bedienfeldes ermöglicht die Unterbringung etwa der doppelten Anzahl an Funktionstasten. Zweckmäßig werden dabei die Funktionstasten in dem einen und dem anderen Bedienfeld angeordnet, mit denen funktionsmäßig ähnliche Bearbeitungsabläufe der Werkzeugmaschine aktiviert werden, so daß das Bedienpult nur von Zeit zu Zeit aus seiner einen Endstellung in die andere Endstellung verdreht werden muß. Das kastenförmige Gehäuse ist in jeder Endstellung selbsttätig, z. B. durch Schnapper, arretierbar und im Bereich seiner stirnseitigen Lagerzapfen können mit den Funktionstasten über elektrische Leitungen verbundene Schalter vorgesehen sein, die mit entsprechenden Schaltern im Gehäuse in der einen oder anderen Endstellung des kastenförmigen Gehäuses zusammenwirken und die elektrischen Verbindungen zwischen den Funktionstasten und den zugeordneten elektronischen Bauelementen der Steuerung herstellen. Als elektrische Verbinder können jedoch auch in sich verdrehbare Kabel verwendet werden, wie sie beispielsweise bei Telefonapparaten als sog. Spiralkabel eingesetzt werden.

Gemäß einer zweckmäßigen konstruktiven Ausgestaltung der Erfindung ist im vorderen Teil des Pultgehäuses eine Wanne von etwa halbkreisförmigem Querschnitt ausgebildet, die stirnseitig von den beiden Seitenwänden des Pultgehäuses begrenzt wird. In diesen Stirnwänden sind die Lagerzapfen des kastenförmigen Gehäuses sowie die elektrischen Schaltverbinder für die Kopplung der jeweiligen Energie- und Steuerleitungen angeordnet. Durch die Anordnung des kastenförmigen Gehäuses mit den doppelseitigen Bedienfeldern in einer z. B. durch einen Bodenteil abgeschlossenen Wanne wird verhindert, daß Verunreinigungen in den Innenraum des Pultgehäuses gelangen können. Statt einer Wanne kann auch ein Schacht vorgesehen sein.

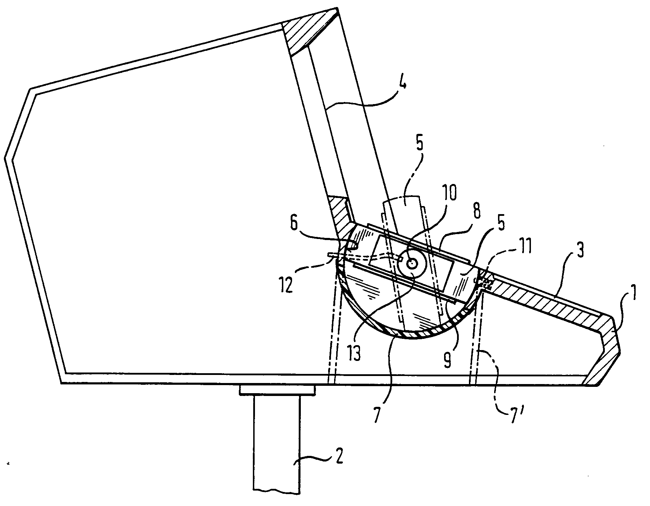

Weitere Besonderheiten und Vorzüge ergeben sich aus der folgenden Beschreibung eines in der Zeichnung im Vertikalschnitt schematisch dargestellten Steuerpults.

Das dargestellte Steuerpult besitzt ein Pultgehäuse 1, das auf einem Ständer 2 montiert ist. Im Vorderteil dieses Pultgehäuses 1 ist ein ebenes, schräg nach vorn weisendes ortsfestes Bedienfeld 3 angeordnet, das Funktionstasten und ggf. optische Anzeigen für die Grundoperationen der mit dem Steuerpult gekoppelten Werkzeugmaschine aufweist. Ferner ist im oberen Teil des Pultgehäuses 1 ein Bildschirm 4 in bekannter Weise vorgesehen.

Wie gezeigt, befindet sich hinter dem ortsfesten Bedienfeld 3 ein kastenförmiges Gehäuse 5 in einer Ausnehmung 6 des Pultgehäuses 1, die von einem lösbar befestigten wannenförmigen Bodendeckel 7 und geraden Seitenwänden begrenzt wird. Statt dieser wannenförmigen Abdeckung kann auch ein Schacht 7' vorgesehen sein, durch den eventuelle Schmutzpartikel hindurchfallen. Dieses kastenförmige Gehäuse 5 weist auf seiner Oberseite und seiner Unterseite je ein zusätzliches Bedienfeld 8, 9 auf, wobei diese beiden Bedienfelder 8, 9 mit je einer Gruppe von speziellen Funktionstasten besetzt sind. An den stirnseitigen Querwänden des kastenförmigen Gehäuses 5 sind zentrale Lagerzapfen 10 gelagert, mit denen das Gehäuse 5 mittels eines seitlich vorstehenden Handrads - nicht dargestellt - um seine horizontale Mittelachse aus der dargestellten Lage um eine halbe Umdrehung verschwenkt werden kann, so daß sich danach das - bisher untere - Bedienfeld 9 in der von oben zugänglichen Bedienposition befindet. Zur Sicherung der einen oder anderen Endstellung des kastenförmigen Gehäuses 5 im Pultgehäuse 1 ist eine Arretierung vorgesehen, die auf geeignete Weise ausgebildet sein kann und bei dem dargestellten Ausführungsbeispiel als federbelastete Kugelraste 11 ausgeführt ist. Zur elektrischen Verbindung der Funktionstasten des einen oder anderen Bedienfeldes 8 oder 9 mit den im Pultgehäuse 1 befindlichen Leitungen 12 ist bei dem dargestellten Ausführungsbeispiel im Bereich zumindest eines Lagerzapfens 10 eine Schalteranordnung 13 vorgesehen, die z. B. mitdrehende segmentierte Schleifringe oder auch Schaltfinger enthalten kann, welche über Steuerleitungen mit den einzelnen Funktionstasten des jeweiligen Bedienfeldes 8, 9 verbunden sind und die in der jeweiligen Endstellung mit zugehörigen ortsfesten Schaltorganen am Ende der Steuerleitung 12 in Kontakt gelangen. Eine technisch einfachere elektrische Verbindung besteht in der Verwendung eines verdrehbaren Kabels, d. h. eines sog. Spiralkabels, durch das die Schleifringkontakte und -schalter wegfallen können.

Die Erfindung ist nicht auf das dargestellte Ausführungsbeispiel beschränkt. So kann statt des etwa rechteckigen Gehäuses 5 auch ein im Querschnitt dreieckiges Gehäuse mit insgesamt drei Bedienfeldern drehbar im Pultgehäuse in der dargestellten Position oder auch an einer anderen Stelle gelagert sein. Wesentlich dabei ist, daß die bequeme und ergonomisch optimierte Bedienbarkeit der Funktionstasten der jeweiligen Bedienfelder erhalten bleibt.

In weiterer vorteilhafter Ausgestaltung der Erfindung können auch mehrere kastenförmige Gehäuse mit nur einem oder auch den beiden Bedienfeldern auswechselbar im Pultgehäuse angeordnet sein. Dies bietet den Vorteil, daß bei gleichen Steuerpulten für unterschiedliche Maschinentypen verschiedenartige Bedienfelder verwendet werden können. Ferner können die Anwendungs- und Programmier-Möglichkeiten der Maschinensteuerung auf einfache Weise erweitert werden, indem jeder Maschine bzw. jedem Steuerpult mehrere kastenförmige Gehäuse mit geeigneten Bedienfeldern beigegeben werden, die dann je nach Bedienungsbedarf im Steuerpult ausgewechselt werden können. Die verschiedenen Funktionselemente, wie Tasten, Leuchtanzeigen od. dgl., sollten auf jedem Bedienfeld so angeordnet sein, daß komplette Bearbeitungsvorgänge ausgeführt werden können, ohne daß das jeweilige Bedienfeld gewechselt werden müßte.

## Patentansprüche

1. Steuerpult für eine programmgesteuerte Werkzeugmaschine, bestehend aus einem Ständer (2), einem ergonomisch angeordneten Bedienfeld (3) mit einer Vielzahl von Funktionstasten und aus einem Bildschirm (4), wobei das Bedienfeld und der Bildschirm in einem gemeinsamen Pultgehäuse (1) angeordnet sind,
**gekennzeichnet durch**
mehrere gesonderte Bedienfelder (8, 9), die wechselweise in einer in der Bedienerfläche des Pultgehäuses (1) vorgesehenen Ausnehmung (6) positionierbar sind und deren Funktionselemente über elektrische Anschlußverbinder mit den zugehörigen Bauteilen im Steuerpult verbindbar sind.

2. Steuerpult nach Anspruch 1,
dadurch gekennzeichnet,
daß in der Bedienerfläche des Pultgehäuses (1) ein kastenförmiges Gehäuse (5) verschwenkbar gelagert ist, das an seiner Oberseite und an seiner Unterseite je ein Bedienfeld (8, 9) mit Funktionstasten aufweist und in je einer Bedienstellung des einen oder anderen Bedienfeldes (8, 9) im Pultgehäuse arretierbar ist.

3. Steuerpult nach Anspruch 2,
dadurch gekennzeichnet,
daß an dem kastenförmigen Gehäuse (5) zwei diametral gegenüberliegende Lagerzapfen (10) befestigt sind, die in entsprechenden Gegenlagern des Pultgehäuses verdrehbar gelagert sind.

4. Steuerpult nach einem der Ansprüche 1 bis 3,
dadurch gekennzeichnet,
daß die Arretierung des kastenförmigen Gehäuses (5) in der einen oder anderen Endstellung als Feder-Rastung (11) ausgebildet ist.

5. Steuerpult nach einem der Ansprüche 1 bis 4,
dadurch gekennzeichnet,
daß die Funktionstasten der einzelnen Bedienfelder (8, 9) über elektrische Leitungen mit am Gehäuse (5) angeordneten Schaltelementen (13) verbunden sind, die in der einen bzw. der anderen Endstellung des Gehäuses (5) mit entsprechenden ortsfesten Schaltern am Pultgehäuse in elektrischen Kontakt gelangen.

6. Steuerpult nach einem der Ansprüche 2 bis 4,
dadurch gekennzeichnet,
daß die Funktionselemente der beiden Bedienfelder (8, 9) über ein zentrales verdrehbares Kabel mit den zugehörigen Bauteilen im Steuerpult verbunden sind.

7. Steuerpult nach einem der Ansprüche 1 bis 6,
dadurch gekennzeichnet,
daß im Pultgehäuse (1) unter der Ausnehmung eine Wanne (6) mit einem Boden (7) ausgebildet ist, in deren Stirnwänden die Lagerzapfen (10) des kastenförmigen Gehäuses (5) und ein Antrieb zum Verschwenken des Gehäuses (5) angeordnet sind.

8. Steuerpult nach einem der Ansprüche 1 bis 6,
dadurch gekennzeichnet,
daß im Pultgehäuse (1) unter der Ausnehmung ein Schacht (7') ausgebildet ist, in dessen Stirnwänden die Lagerzapfen (10) des Gehäuses (5) gelagert und ein Antrieb zum Verschwenken des Gehäuses (5) vorgesehen sind.

9. Steuerpult nach einem der vorhergehenden Ansprüche,
dadurch gekennzeichnet,
daß das kastenförmige Gehäuse (5) auswechselbar im Pultgehäuse (1) angeordnet ist.
